Europäisches Patentamt

European Patent Office

Office européen des brevets

(19)

(11) Veröffentlichungsnummer : **0 083 675**
**B1**

(12) # EUROPÄISCHE PATENTSCHRIFT

(45) Veröffentlichungstag der Patentschrift :
26.03.86

(21) Anmeldenummer : **82100151.8**

(22) Anmeldetag : **12.01.82**

(51) Int. Cl.⁴ : **E 21 B 17/042, F 16 L 58/18,
F 16 L 57/00, F 16 L 15/00**

(54) **Schutzkappe und Schutznippel für Ölfeldrohre.**

(43) Veröffentlichungstag der Anmeldung :
20.07.83 Patentblatt 83/29

(45) Bekanntmachung des Hinweises auf die Patenterteilung : 26.03.86 Patentblatt 86/13

(84) Benannte Vertragsstaaten :
**AT BE CH FR GB IT LI LU NL SE**

(56) Entgegenhaltungen :
**BE-A- 884 887
CH-A- 373 232
CH-A- 577 130
DE-A- 2 227 857
US-A- 2 825 584
US-A- 2 940 787
US-A- 3 101 207
US-A- 3 361 448
US-A- 3 687 493
US-A- 3 709 306
US-A- 4 003 669**

(73) Patentinhaber : **Wilhelm Strödter Maschinen- und
Apparatebau
Hüserstrasse 35
D-4700 Hamm 4 (DE)**

(72) Erfinder : **Strödter, Wilhelm
Zinnienstrasse 26
D-4700 Hamm 1 (DE)**

Jouve, 18, rue St-Denis, 75001 Paris, France

**Beschreibung**

Die Erfindung betrifft Schutzkappen und Schutznippel für Enden von Rohren, insbesondere von Ölfeldrohren mit Gewinde oder mit Gewinde und Dichtungsflächen, aus einem metallenen Körper mit einem zum Ölfeldrohr passenden Gewinde.

Ölfeldrohre, insbesondere Futter- und Steigrohre für Tiefbohrungen werden heute oft so mit Gewinde und Dichtungsflächen am Rohrende zum Verbinden der Rohre ausgestattet, daß keine zusätzlichen Dichtelemente aus z. B. Weichmetall oder organischen Stoffen benötigt werden, also eine Dichtungspaarung Staht-Stahl vorliegt, die höchsten Drücken standhält.

Diese Dichtmethode erfordert jedoch, daß die mit hoher Genauigkeit geschnittenen Gewinde und Dichtungsflächen der Verbindung keine Korrosions- oder Schlagstellen aufweisen dürfen, wie sie bei Transport, Lagerung oder Handhabung leicht entstehen können. Während des Transportes zwischen Herstellungs- und Anwendungsort werden daher die Rohrenden mit Schutzkappen und Schutznippel versehen.

Es sind Schutzkappen und Schutznippel bekannt (DE-C-757 845, Abb. 3 ff), bei denen eine stoßdämpfende Auskleidung aus z. B. Bitumen durch z. B. Gießen fest mit einem Körper aus Metall verbunden ist und ein Gewinde aufweist. Nachteilig hierbei ist, daß die Bitumenauskleidung insbesondere bei Erwärmung durch Sonneneinstrahlung während des Transportes, Lagerung zerfließt und somit der Schutz gegen Schläge verloren geht. Des weiteren benötigt Bitumen bei der Herstellung eine gewisse Aushärtezeit, die eine wirtschaftliche Fertigung behindert. Darüber hinaus wird bei diesem bekannten Schutz lediglich das Gewinde durch Metallkappen und stoßdämpfende Auskleidung geschützt, nicht jedoch die ebenfalls gefährdeten Dichtungsflächen am Rohrende.

Weitere Möglichkeiten für den Rohrendenschutz zeigen die US-Patentschriften 2 212 423, 3 000 402, 4 020 873, 4 020 874 auf. Diese Schutzkappen und Schutznippel bestehen aus zwei Bauteilen, einem äußeren aus Metall oder Kunststoff mit einem darin eingelegten Bauteil aus flexiblem Material, welches ein Gewinde aufweist und in der Regel auch die Dichtungsfläche am Rohrende umfaßt.

Bei einigen Schutzvorrichtungen (US-A-2 212 423, 3 000 402) besteht die Gefahr, daß Stöße auf sie in Rohraxialrichtung den Mantel von dem gewindetragenden Teil abstreifen, insbesondere wenn sich durch Temperaturschwankungen die Teile aufgrund unterschiedlicher Ausdehnungskoeffizienten voneinander lösen.

Alle Vorrichtungen haben gemeinsam den Nachteil, daß sie höheren Drehmomenten bei Verschraubung nicht gewachsen sind und die Bauteile voneinander getrennt werden können, so daß außerordentliche Schwierigkeiten auf der Baustelle entstehen, das gewindetragende Bauteil vom Rohrende zu lösen. Im übrigen erlauben die Systeme kein Lehren des Rohres mit dem Prüfdorn (Driften) bei eingeschraubten Schutznippel. Diese Nachteile hat der Schutz gemäß DE-A-2 800 747 nicht. Das gewindetragende stoßdämpfende Material ist mit dem Metallmantel fest verbunden, kann so höhere radiale Kräfte aufnehmen und bietet auch Schutz für die Dichtungsflächen am Rohrende. Ein Abreißen des stoßdämpfenden Materials vom Metallmantel bei axialer Schlagbeanspruchung, wie es häufig beim Stapeln und Transport der Ölfeldrohre auftritt, ist aber auch hier möglich.

Drei entscheidende Nachteile weisen aber die bisher zum Stand der Technik gehörenden Schutzkappen und Schutznippel mit gewindetragender, relativ dicker Kunststoffschicht auf :

— erstens eine Anfälligkeit gegen Temperaturwechsel, der zwangsläufig bei Transport und Verwendung in arktischen oder äquatorialen Gegenden auftritt ; bei tiefen Temperaturen wird das Material spröder und reißt, bei hohen Temperaturen (Aufheizung des Stahles bis etwa 140 °C) zerfließt die Auskleidung ;

— zweitens zeigt die Praxis an den Bohrstellen, daß die bei der Handhabung (Kranumschlag im Herstellerwerk, Hafen, Baustelle) eingebeulten Metallmäntel (meist relativ dünnes Blech im Verhältnis zur Rohrwandung) der Schutzkappen die Kunststoff-Auskleidung zerquetschen und so stark in die häufig sägezahnartigen, teils gasdichten Rohrgewinde pressen, daß ein Lösen der Schutzkappe nur mit Gewalt unter Beschädigung der Gewinde des Ölfeldrohres möglich ist. Die daraus resultierenden Kosten und Probleme für Rücktransport und/oder Neuanfertigung der Rohre sind enorm ;

— drittens sind sie relativ aufwendig zu fertigen.

Es sind weiterhin Schutzkappen und Schutznippel bekannt, die gänzlich aus Stahl bestehen und auf das Rohr geschraubt werden (DE-C-757 845, Abb. 1, 2). Der Schutz der Rohrenden gegen Beschädigung durch Korrosion ist dabei naturgemäß relativ gering, da Gewindeabweichungen zwischen dem Schutz und dem Rohr zu Kapilarspalten führen, die das Eindringen korrosiver Medien begünstigen. Bei Schlagbeanspruchung wird die Energie nicht durch stoßdämpfende Auskleidung absorbiert, sondern die Deformation der Schutzkappe hat Beschädigungen der zu schützenden Gewinde- und Dichtungsflächenteile zur Folge. Trotz Verwendung des meist für Ölfeldrohre vorgeschriebenen Fettes nach API muß außerdem bei diesem Schutz ein relativ großer Aufwand für die Herstellung genauer Gewinde (geringe Flankenwinkel-, Längen-, Durchmesser-, Radientoleranzen und Oberflächenrauhigkeit) getrieben werden, da zur Vermeidung des Festiressens oder der Reibung der Gewinde ineinander eine genau definierte Passung auf dem Rohrgewinde erforderlich ist. Bei der Verschraubung auf dem Rohrende läßt sich darüber hinaus häufig ein Zerkratzen der empfindlichen metallischen, häufig für besonders hohe Ansprüche glasgestrahlten und phosphatierten Dichtungsflächen und Gewinde nicht vermeiden. Sollte das API-Fett aufgrund hoher Temperaturen schmelzen, entstehen minimale Spalte, die der Spaltkorrosion Vorschub leisten.

Von daher liegt der Erfindung die Aufgabe zugrunde, für Rohre, die an den Enden mit Gewinde oder mit Gewinde und Dichtungsflächen versehen sind, Korrosion und mechanische Beschädigungen der Gewinde und Dichtungsflächen verhindernde Schutzkappen und Schutznippel zu schaffen, welche auch bei starkem Temperaturwechsel nicht durch Zerfließen, Reißen, Brechen o. ä. sowie bei längsaxialer Schlagbeanspruchung zerstört werden, aber trotzdem während Transport und Lagerung der Rohre einen sicheren Halt auf dem Rohrende haben, ein schonendes leichtes Auf- und Abschrauben ohne Beschädigung der Oberflächen von Gewinde und Dichtungsflächen ermöglichen, ein Driften der Rohre bei aufgeschraubtem Schutz erlauben und zudem schnell und rationell zu fertigen sind unter Verwendung preiswerter Materialien.

Diese Aufgabe wird erfindungsgemäß durch die im Kennzeichenteil des ersten Anspruches dargestellten Merkmale gelöst. Vorteilhafte Ausbildungen der erfindungsgemäßen Schutzkappen und Schutznippel sind in den weiteren Ansprüchen erfaßt.

Der Vorteil der erfindungsgemäßen Schutzkappen und Schutznippel ist darin zu sehen, daß neben dem Korrosions- und Stoßschutz für die Rohrenden sowie sicherem Sitz auf dem Rohrgewinde beim Transport vom Herstellungs- zum Verwendungsort, die Schutzkappen und Schutznippel an sich sehr widerstandsfähig gegen. Zerstörung sind und ein Lösen und Abstreifen der Umhüllung vom metallenen Körper durch den vorhandenen Form- und Reibschluß zwischen ihnen unmöglich ist. Schutzkappe und Schutznippel sind leicht und einfach aus preiswertem Rohrmaterial oder Blech mit geschnittenem oder gerolltem Gewinde herstellbar, auf das nur noch Kunststoff aufgebracht wird.

Besonders vorteilhaft ist die Möglichkeit, zunächst das Gewinde nur grob vorzudrehen und die Paßgenauigkeit des Gewindes in der Schutzkappe oder auf dem Schutznippel durch Aufbringen der Umhüllung aus Kunststoff zu erzielen.

Trotz der dünnen Umhüllung läßt sich, wie die Praxis zeigt, eine ausreichende Stoßdämpfung für das Gewinde des Ölfeldrohres erreichen. Insbesondere wird mangels Masse vermieden, daß sich bei verbeultem metallenen Körper der Schutzkappe die Kunststoffumhüllung im Gewinde des Ölfeldrohres festklemmt.

Die Kunststoffschichtdicke kann auf die Toleranzbreite (maximales Spiel) der jeweiligen Gewindepaarung beschränkt werden, sollte jedoch aus qualitäts- und fertigungstechnischen Gründen 0,2 mm Dicke nicht unterschreiten. Diese Methode spart Werkstoff und läßt zugleich die Möglichkeit des Lehrens eines Rohres durch den eingeschraubten Schutznippel zu, da die Dicke des metallenen Körpers und der stoßdämpfenden Umhüllung der entsprechenden Rohrwanddicke angepaßt werden kann.

In manchen Fällen ist eine Wiederverwendung der Schutzkappen oder Schutznippel geplant. Zu diesem Zweck ist es sinnvoll, Vorsorge gegen Korrosion zu treffen und den gesamten metallenen Körper mit einer Umhüllung aus Kunststoff zu versehen.

Als besonders vorteilhaft für die verschiedenen Anwendungsfälle haben sich die Kunststoffe Polyamid (PA), Polytetrafluoräthylen (PTFE) und Epoxid-Harz (EP) erwiesen. Während PA und PTFE extremen Temperaturschwankungen gewachsen sind und sehr hohe Zugfestigkeit und Reißdehnung haben, läßt sich für Anwendungsfälle mit eingeschranktem Temperaturbereich die leichte Verarbeitung von EP ausnutzen. PTFE hat bekanntlich einen sehr geringen Reibbeiwert. Es läßt sich daher hervorragend für lange, empfindliche Gewinde und Dichtungsflächen einsetzen, so daß leichtes Auf- und Abschrauben der Schutzkappen und Schutznippel möglich ist.

Im folgenden wird die Erfindung anhand schematisch dargestellter Ausführungsbeispiele näher erläutert werden. Es zeigen

Figur 1 einen axialen Teil-Längsschnitt durch einen erfindungsgemäßen Schutznippel in eingeschraubtem Zustand,

Figur 2 einen axialen Teil-Längsschnitt durch eine erfindungsgemäße Schutzkappe in aufgeschraubtem Zustand,

Figur 3 eine Einzelheit der erfindungsgemäßen Schutzkappe gemäß Anordnung in Fig. 2.

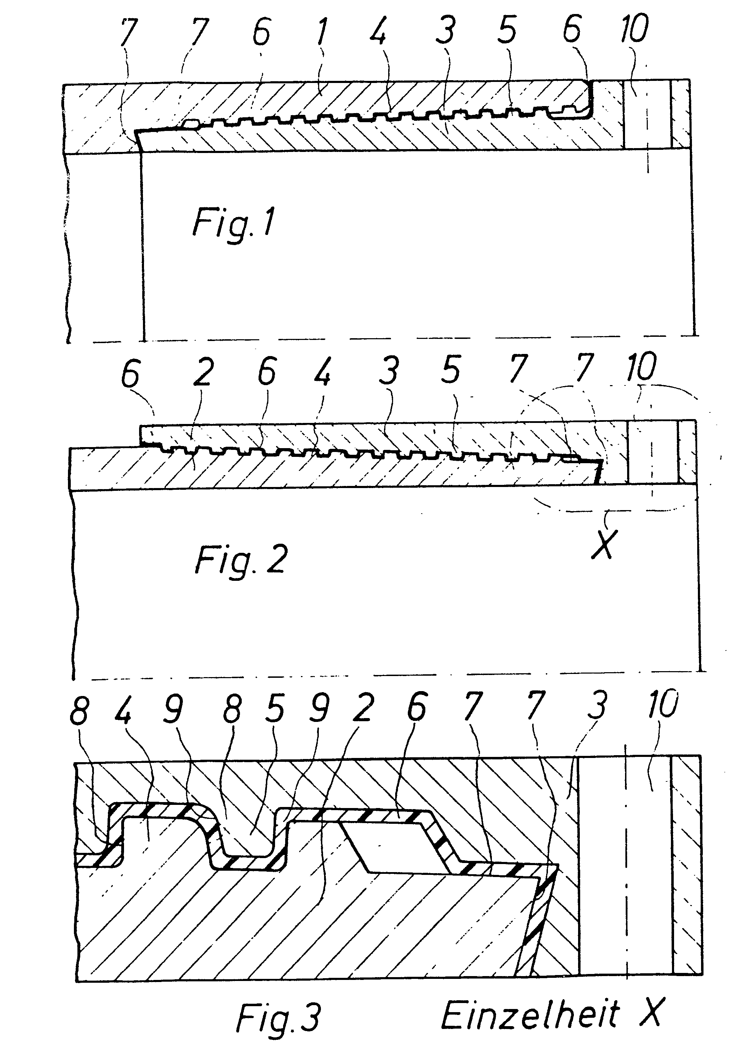

Fig. 1 zeigt ein Muffenende 1 eines Ölfeldrohres mit Gewinde 4 und Dichtungsfläche 7 mit eingeschraubtem Schutznippel, der ebenfalls aus einem metallenen Körper 3 mit Körpergewinde 5 und stoßdämpfender Umhüllung 6 aus Kunststoff besteht sowie eine Bohrung 10 aufweist.

Auf das Vaterrohrende 2 eines Ölfeldrohres mit Gewinde 4 und Dichtungsflächen 7 ist eine Schutzkappe bestehend aus einem metallenen Körper 3 mit dem Körpergewinde 5 und der Umhüllung 6 aufgeschraubt (Fig. 2). Das Aufschrauben wird durch einen in die Bohrung 10 der Schutzkappe einsteckbaren Bolzen (nicht dargestellt) erleichtert.

Der metallene Körper 3 wird von einem passenden Rohr abgesägt, Bohrung 10 eingebracht, vorgedreht und dann in einem Schnitt — grobtoleriert — das Buttress-Gewinde erzeugt. Hierbei ist es nicht erforderlich, die genauen Toleranzen für die Flankenwinkel, Radien, Durchmesser und Längen sowie der Oberflächenrauhigkeit der Zähne des Gewindes 4 des Ölfeldrohres einzuhalten, wie sie nach API vorgeschrieben sind.

Es genügt eine Grobtoleranz mit Untermaß, die natürlich erhebliche Fertigungskosten erspart.

Der metallene Körper 3 wird nach der Entfettung aufgeheizt und unter Hinzufügung eines Haftvermittlers mit einer 0,5 mm dicken Schicht aus PTFE (z. B. Teflon®) beschichtet.

Die der Dichtungsfläche 7 gegenüberliegende Fläche der Schutzkappe (Fig. 3) ist ebenfalls mit Untermaß gedreht, so daß genügend Raum für eine PTFE-Schicht bleibt. Die fertige Schutzkappe läßt sich soweit aufschrauben, daß die flexible verformbare Umhüllung aus PTFE sich satt an die Dichtungsfläche 7 sowie die Zahnflanken 8 des Gewindes 4 anlegt, obwohl die Zahnflanken 9 des Körpergewindes nicht die gleiche Exaktheit in den Toleranzen aufweisen. Die Umhüllung kompensiert die « Fertigungsfehler ». Auch größere Oberflächenrauhigkeiten des Körpergewindes 5 führen bei Aufschrauben der Schutzkappe auf das Rohrende wegen der aufgebrachten Umhüllung zu keinerlei Beschädigung der Gewinde 4 oder Dichtungsflächen 7.

**Patentansprüche**

1. Schutzkappe und Schutznippel für Enden von Rohren (2), insbesondere von Ölfeldrohren mit Gewinde (4) oder mit Gewinde (4) und Dichtungsflächen (7) aus einem metallenen Körper (3) mit einem zum Ölfeldrohr passenden Gewinde (5), dadurch gekennzeichnet, daß der metallene Körper (3) ein grobtolerierbares Körpergewinde (5) mit Untermaß sowie eine grobtolerierbare Dichtungsflächenpassung mit Untermaß und eine dünne stoßdämpfende Umhüllung (6) aus Kunststoff für zumindest Gewinde (4) und Dichtungsflächen (7) des Ölfeldrohres berührende Teile des metallenen Körpers (3) aufweist, die im Bereich des Körpergewindes (5) eine annähernd konstante Schichtdicke hat.

2. Schutzkappe und Schutznippel nach Anspruch 1 dadurch gekennzeichnet, daß nur das Körpergewinde (5) mit der Umhüllung (6) versehen ist.

3. Schutzkappe und Schutznippel nach Anspruch 1, gekennzeichnet durch eine Umhüllung des gesamten metallenen Körpers (3).

4. Schutzkappe und Schutznippel nach Anspruch 1, 2 oder 3, dadurch gekennzeichnet, daß die Umhüllung (6) mindestens 0,2 mm dick ist.

5. Schutzkappe und Schutznippel nach einem oder mehreren der vorhergehenden Ansprüche, dadurch gekennzeichnet, daß die Schichtdicke der Umhüllung (6) der max Toleranzabweichung zwischen Körpergewinde (5) und Gewinde (4) des Ölfeldrohres entspricht.

6. Schutzkappe und Schutznippel nach einem oder mehreren der vorherigen Ansprüche, dadurch gekennzeichnet, daß die Umhüllung (6) aus Polyamid besteht.

7. Schutzkappe und Schutznippel nach einem oder mehreren der vorhergehenden Ansprüche, dadurch gekennzeichnet, daß die Umhüllung (6) aus Polytetrafluoräthylen besteht.

8. Schutzkappe und Schutznippel nach einem oder mehreren der vorhergehenden Ansprüche, dadurch gekennzeichnet, daß die Umhüllung (6) aus Epoxid-Harz besteht.

**Claims**

1. Protection sleeve and socket for ends of pipes (2) especially for oil pipes with threaded pipe ends (4) or threaded pipe ends (4) and sealing surfaces (7) comprising a metallic member (3) with a thread (5) compatible to the oil pipe thread (4) characterized in that the metallic member (3) having an undersized thread (5) and sealing surface meeting coarse tolerances versus the thread (4) of the pipe (2) to be protected and a shock absorbing thin covering (6) of plastic for at least the thread (4) and the sealing surfaces (7) of the oil pipe touching parts of the metallic member (3) which covering (6) shows substantially uniform thickness over the region of the thread (5).

2. Protection sleeve and socket according to claim 1, characterized in that only the thread (5) of the metallic member (3) having a covering (6).

3. Protection sleeve and socket according to claim 1, characterized in that the covering (6) surrounds the metallic member (3) all over.

4. Protection sleeve and socket, according to claims 1, 2 or 3, characterized in that the covering (6) is at least 0,2 mm thick.

5. Protection sleeve and socket according to claims 1-4 characterized in that the thickness of the covering (6) corresponds to about the maximum deviation within the tolerance between the thread (5) of the metallic member and the thread (4) of the oil pipe (2).

6. Protection sleeve and socket according to claims 1-5 characterized in that the covering (6) comprises a polyamide.

7. Protection sleeve and socket according to claims 1-5 characterized in that the covering (6) comprises polytetrafluorethylene.

8. Protection sleeve and socket according to claims 1-5 characterized in that the covering (6) comprises an epoxy resin.

**Revendications**

1. Manchon et douille de protection pour les extrémités de tuyaux (2), en particulier pour tuyaux pétroliers avec fileté (4) ou avec filetés (4) et surfaces de contact ou de joint (7) d'un corps métallique (3) avec un fileté (5) compatible à fileté (4) de tuyaux pétroliers, caractérisée en ce que le corps métallique (3) a un fileté (5) et surface de contact ou de joint avec large tolérance avec dimension inférieure à la côte préconisée et mince un revêtement (6) amortissant de chocs à matière plastique pour le moins ces parts du corps métalliques (3) — qui touchent le fileté (4) et les surfaces de contact ou de joint (7) de tuyaux pétroliers — qui a approximativement une épaisseur constante au fileté (5) de corps métallique (3).

2. Manchon et douille de protection selon la revendication 1 caractérisée en ce que seulement le fileté (5) de corps métallique (3) a un revêtement (6).

3. Manchon et douille de protection selon la revendication 1, caractérisée en ce que le corps métallique (3) est totalement entouré à un revêtement (6).

4. Manchon et douille de protection selon les revendications 1, 2 ou 3, caractérisée en ce que l'épaisseur de revêtement (6) est au moins 0,2 mm.

5. Manchon et douille de protection selon les revendications 1-4, caractérisée en ce que l'épaisseur de la couche de revêtement (6) correspond à la tolérance maximale entre le fileté (5) de corps métallique (3) et le fileté (4) de tuyaux pétroliers.

6. Manchon et douille de protection selon les revendications 1-5, caractérisée en ce que le revêtement (6) consiste en polyamide.

7. Manchon et douille de protection selon les revendications 1-5, caractérisée en ce que le revêtement (6) consiste en polytétrafluoréthylène.

8. Manchon et douille de protection selon les revendications 1-5, caractérisée en ce que le revêtement (6) consiste en époxy-résine.

0 083 675

Fig.1

Fig. 2

X

Fig.3          Einzelheit X